Europäisches Patentamt

European Patent Office

Office européen des brevets

(19)

(11) Publication number: **0 422 577 A2**

(12) # EUROPEAN PATENT APPLICATION

(21) Application number: **90119322.7**

(22) Date of filing: **09.10.90**

(51) Int. Cl.⁵: **G06F 3/033**

(30) Priority: **13.10.89 US 421242**

(43) Date of publication of application:
**17.04.91 Bulletin 91/16**

(84) Designated Contracting States:
**AT BE CH DE DK ES FR GB GR IT LI LU NL SE**

(71) Applicant: **MICROSLATE, INC.**
**9265 Ignace Street, Suite"D"**
**Brossard, QC J4Y 2P3(CA)**

(72) Inventor: **Clough, Willian A.**

**RR1 Bainsville, Ontario(CA)**
Inventor: **Ouellette, Daniel**
**8 Pierre Paul de Maray**
**St. Luc, Quebec(CA)**

(74) Representative: **Endlich, Fritz, Dipl.-Phys.**
**Postfach 1326 Blumenstrasse 8**
**W-8034 Germering(DE)**

(54) Method and apparatus for displaying simulated keyboards on touch-sensitive displays.

(57) A general-purpose, simulated keyboard for use on a touch-sensitive display of a computer system is generated independent of any applications run on the computer system. The simulated keyboard is displayed on the touch-sensitive display at manually or automatically set positions with respect to a concurrently-displayed application output screen. Alternate automatic positioning modes either position the simulated keyboard in the non-active portion of the display in response to the position of the cursor, or position the simulated keyboard in a portion of the display while displaying a height-compressed version of the application output screen in the remaining portion of the display.

FIG. 1

# METHOD AND APPARATUS FOR DISPLAYING SIMULATED KEYBOARDS ON TOUCH-SENSITIVE DIS-PLAYS

## FIELD OF THE INVENTION

This invention relates to computer systems and more particularly to touch-sensitive input/output ("I/O") devices thereof.

## BACKGROUND OF THE INVENTION

Heretofore, personal computers and computer terminals have been suggested which use touch-sensitive displays as inter-active user-interfaces for both input and output of information (i.e., text and graphics). A touch sensitive display of this type generally has a conventional video display screen provided with a transparent touch-sensitive screen as a frontplate. Typically, the touch sensitive display is used in conjunction with application programs specifically designed to take advantage of this type of I/O device. In use, some such application programs can cause the display screens to display simulated conventional typewriter keyboards. The simulated keyboard is then available for entering data and commands for later use or execution in the application program that generated the keyboard. Thus, the simulated keyboards in such applications are dedicated for use only in the specific applications in which they have been programmed.

In known simulated keyboards of this type, each key of the simulated keyboard is represented by a discretely-defined area bounded by a frame. In each key frame there appears an indicium of an alpha-numeric character, or a character representing punctuation, other symbol, or function. The simulated keyboard is visible through the touch-sensitive-screen overlaying the display.

For typing on the simulated keyboard, the user touches the touch-sensitive-screen on the displayed keys in the same fashion that a typist uses a conventional typewriter. The "touches" on the display cause the generation of coded electrical signals corresponding to the locations that are touched, and thereby representing the displayed characters (e.g., capital or lower case letters depending on whether the displayed shift key is touched) or functions selected by the user. The coded electrical signals then are processed by the computer in the same manner that it would process the electrical signals generated by a conventional keyboard input device.

Unfortunately, using the touch-sensitive display as a combination I/O device presents certain complications. For instance, when the simulated keyboard is "called up" and displayed on the screen, it may very well occupy the entire raster or a substantial portion thereof. In order to accommodate such a simulated keyboard, either the normal output screen of that program must be removed from view in its entirety, or the window in which the simulated keyboard appears must be an overlay which replaces and, thereby, removes from view, a substantial portion of the program's normal output screen.

Clearly, this would not be suitable for running standard, commercially-available software packages such as data processing, spread sheets, or data-base management programs, even if such simulated keyboards were made available within these programs.

If the simulated keyboard were positioned in the same place on the screen whenever it were displayed in such programs, the simulated keyboard, as often as not, would replace or cover the "active portion" of the software output screen. The active portion is the area of the screen into which the information being typed is to be entered. It is easy to understand that, if the user must enter data in such programs without the active portion of the software output screen being visible, data-entry accuracy and/or efficiency would suffer, to say the least.

Accordingly, simply incorporating a touch-sensitive simulated keyboard in such programs would result in geometric conflicts between the normal software output screen and the simulated keyboard window.

Notwithstanding, a number of patents have suggested the use of touch sensitive displays and simulated keyboards. United States Patent Nos. 4,071,691, 4,198,539, 4,293,734, 4,371,746 and 4,476,463 disclose touch-sensitive screens. U.S. Patent No. 4,202,041 discloses the use of a simulated keyboard displayed on a touch sensitive display.

In addition, U.S. Patent No. 4,763,356 discloses the use of a simulated typewriter-type keyboard on a touch-sensitive display used specifically in filling out electronic forms. This patent even suggests a limited solution for the geometric conflict problem mentioned above; namely, whenever the application displays a simulated keyboard, the user can move the keyboard each time it appears so as not to cover a user-selectable portion of the screen. For that purpose, a movement icon is displayed with the simulated keyboard, and when the movement icon is touched by the user, the displayed keyboard is moved in the direction of the point touched.

## SUMMARY OF THE INVENTION

The invention resides in the provision of a touch-sensitive simulated keyboard which is a general-purpose, rather than application-dedicated, I/O tool-- similar in that way to a conventional keyboard device or mouse. The simulated keyboard program remains resident in computer memory and can be used at the discretion of the computer user at any time in conjunction with any application program run on the computer.

In addition, the invention resides in techniques for automatically positioning a simulated keyboard, e.g., a typewriter-type keyboard, to avoid geometric conflicts between the active portion of a normal software output screen and the simulated keyboard window.

In a first positioning technique in accordance with the invention, the simulated keyboard is positioned automatically in a part of the screen which does not include the active region. The active region is indicated by the cursor. In a preferred embodiment, the simulated keyboard is positioned in the bottom portion, e.g. the bottom half, of the screen whenever the cursor is located in the top half of the screen, and vice versa.

In a second positioning technique, the keyboard automatically appears in a portion of the screen, e.g., the bottom half, while the software output screen appears in its entirety, though reduced in height (e.g., by 50%), in another portion, e.g. the top half, of the screen. In other words, using this approach, none of the software output screen is concealed by the simulated keyboard, but rather concurrent display of both in their entirety is achieved. In a sense, this approach is tantamount to providing electronically a second display when needed for the concurrent display of input and output screens, albeit, using height compression to "squeeze" a full screen's information into a half screen with an attending decrease in resolution.

Preferably, both of the above-mentioned techniques are user-selectable alternatives. For instance, in a preferred embodiment, on touching a displayed control button and making a selection from a menu, the computer user activates the simulated keyboard and can cause it to be positioned automatically with respect to the cursor, i.e., use the above-mentioned first positioning technique, whenever the simulated keyboard is displayed. Alternatively, on selecting a different menu entry, the computer user can cause both the application output screen and the simulated keyboard input screen to be concurrently displayed, i.e., use the above-mentioned second positioning technique, whenever the simulated keyboard is called to screen.

Preferably, also, the computer user is provided with a third option, that of manually locating the simulated keyboard at any desired position on the display raster. In addition, once activated, the simulated keyboard can be displayed on the screen or removed therefrom simply by touching a displayed toggle control button.

As indicated above, the touch-sensitive keyboard in accordance with the invention is preferably a general-purpose input/output device that is controlled at the operating system level rather than the software application level. In other words, the control of the simulated keyboard display, including its position within the display's raster and, in the first technique, with respect to the cursor, is the responsibility of the basic input/output services of the computer. In this way, the touch-sensitive keyboard is resident within the computer as a system utility and is independent of any specific application run on the computer.

## BRIEF DESCRIPTION OF THE DRAWINGS

For a fuller understanding of the nature and objects of the invention, reference should be had to the following detailed description taken in connection with the accompanying drawings, in which:

FIGURE 1 is a block diagram of a computer system in accordance with the invention;

FIGURES 2A and 2B are front views of the touch sensitive display of FIGURE 1, respectively showing an initial screen having only control buttons being displayed thereon, and a function menu screen called to the display on pressing one of the control buttons;

FIGURES 3A through 3G are exemplary screens displayed on the touch sensitive display of FIGURE 1, which illustrate simulated keyboard positioning techniques in accordance with the invention; and

FIGURES 4 through 8 depict, in flow chart form, an algorithm for displaying and using a touch-sensitive simulated keyboard on the computer system of FIGURE 1.

## DETAILED DESCRIPTION OF PREFERRED EMBODIMENT

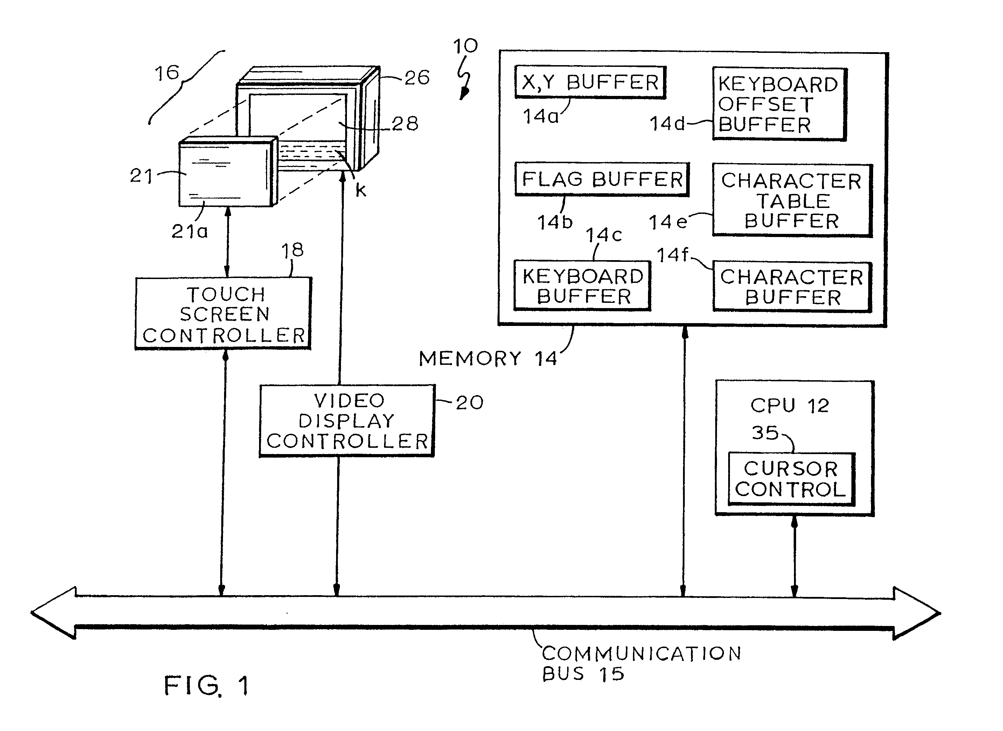

FIGURE 1 shows a computer system 10 in accordance with a preferred practice of the invention. At the working heart of the system 10 is a central processing unit ("CPU") 12 which communicates with a memory 14 and peripherals via a bus 15. These peripherals include an interactive user interface 16, touch screen controller 18 and display controller 20.

The user interface 16 has a transparent touch-sensitive input screen or panel (the "touch screen") 24 and a conventional display unit 26. The display unit 26 has an output screen 28. Preferably, the touch screen 24, overlays, i.e., mounts as a frontplate directly over, the output screen 28. Shown on the output screen 28 is a simulated keyboard, generally designated at K.

More specifically, the touch screen 24 in a preferred embodiment is a glass plate coated on its touch-sensitive side 24a (i.e., the side facing away from the output screen 28) with a resistive material, and then covered on that side with a Mylar contact sheet (not separately shown). The contact sheet is maintained at a small, substantially-uniform distance from the touch-sensitive side of the glass plate. Pressure exerted on the contact sheet by a finger, stylus or other object, (herein called a "touch") causes the contact sheet to make electrical contact with the resistive coating.

In use, the touch screen controller 18 impresses a voltage gradient across the resistive coating alternately in the "x" (i.e., horizontal) and "y" (i.e., vertical) directions. By establishing a voltage divider circuit, the touch produces voltage signals detectable by the touch screen controller 18 which are representative of the average Cartesian coordinates in the x- and y- directions of the touched area of the screen.

These voltage signals are converted to digital signals by the touch screen controller 18. These digital signals represent each of, for instance, 256, discrete positions on the touch screen 24 in each direction. To accomplish this, for example, two 8-bit bytes are used to represent the x-coordinate, and two 8-bit bytes are used to represent the y-coordinate. Thus, the digital signal representing each such touch constitutes a coordinate set having the following format:

$$1 \quad 2 \quad 3 \quad 4 \quad 5$$
$$x_1 \quad x_2 \quad , \quad y_1 \quad y_2$$

where "$x_1$" and "$x_2$" are the two bytes or characters representing the x-coordinate, and "$y_1$" and "$y_2$" are the two bytes or characters representing the y-coordinate. Each such five-character coordinate set completely defines a touch.

The five-character coordinate sets are transmitted by the touch screen controller 18 over the communication bus 15 to the CPU 12 for processing. A suitable communication signal for transmitting the coordinates to the CPU 12 preferably includes alignment bits added as a header and between each of the characters to identify their boundaries, thereby aiding data recovery at the CPU 12. Suitable touch screens and touch screen controllers are commercially-available, e.g., from ELOGRAPHICS of Oak Ridge, Tennessee, U.S.A.

The CPU 12 receives the coordinate sets from the touch-screen controller 18, and stores the sets as data structures 14a each sequentially in an x,y buffer 14a, which is, for example, a six-byte section of the memory 14. The CPU 12 includes a cursor control 35 for tracking and storing the location of the cursor, and controlling its position on the display. Both the CPU 12 and memory 14 can be implemented using conventional, commercially available hardware.

The memory 14 also includes a flag buffer 14b, a keyboard buffer 14c, a keyboard offset buffer 14d, a character table buffer 14e and a character buffer 14f. These are described below.

The display 26 is preferably a liquid crystal display which is back lit. A suitable size for the raster of the display 26 is, for example, 640 x 400 (i.e., 400 rows of pixels, with 640 pixels in each row), although other raster sizes providing a different number of rows or a different number of pixels in each row also can be used. Known displays having substantially fewer than 400 rows of pixels, e.g., displays having 200 rows of pixels, however, typically have insufficient resolution for implementing the positioning technique entailing height compaction, which is described below.

The computer system 10 can also include other components and features conventionally found in personal computers or computer terminals. Computer 10 is shown and described only to the extent necessary to convey an enabling understanding of the best mode of implementing the invention, as will be apparent to those skilled in the art

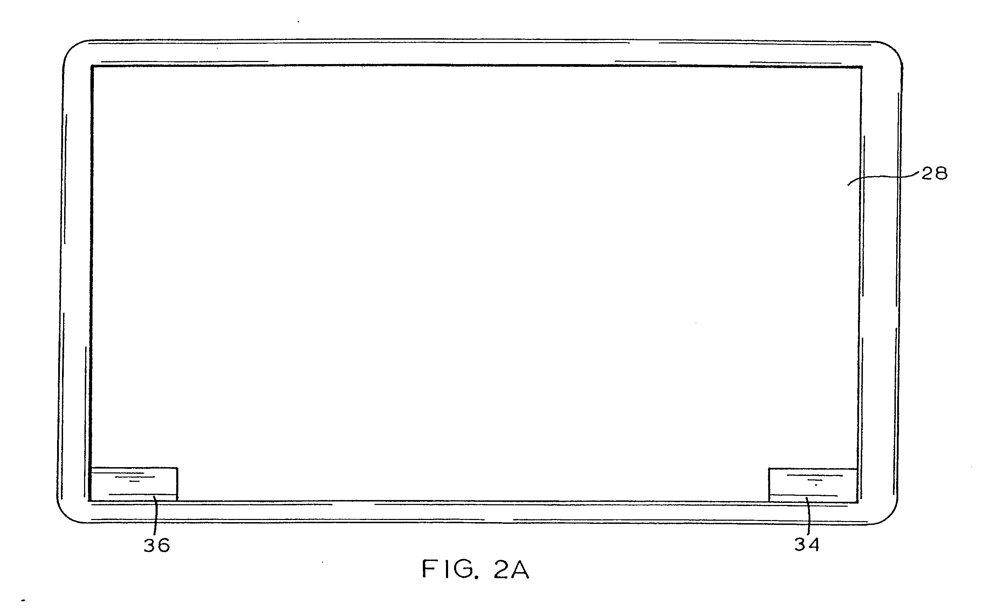

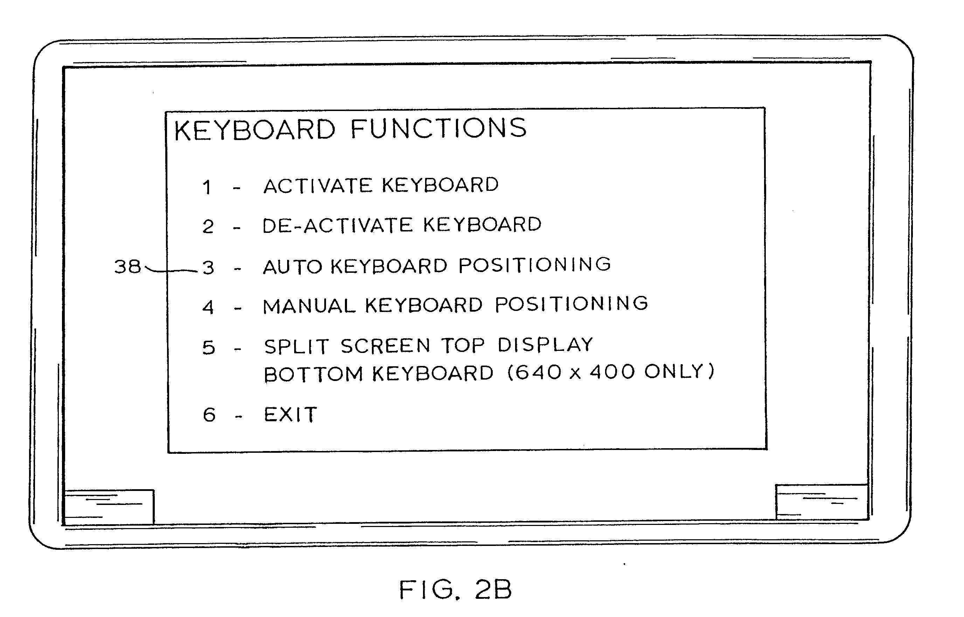

FIGURES 2A and 2B depict display layouts for the touch-sensitive display 26 showing two control "buttons" (i.e., keys): a touch screen function button 34 appears in the lower right-hand corner of the screen 28, and a display/remove keyboard toggle button 36 appears in the lower left-hand corner of the screen 28, as viewed in those drawings.

When the touch screen function button 34 is pressed (i.e., touched), a menu 38 appears on-screen, as shown in FIGURE 2B. The user can then select one or more entries (i.e., "functions") in the menu 38. As shown, the first function, ACTIVATE KEYBOARD, when selected, causes a keyboard, e.g., a conventional 101-key QWERTY typewriter keyboard K to be activated or enabled so that it appears on screen on user command. The second function, DE-ACTIVATE KEYBOARD, when selected, causes the previously activated simulated keyboard K to be deactivated. The third function, AUTO-KEYBOARD POSITIONING, when selected, causes the simulated keyboard K to be positioned automatically with respect to the cursor to appear on the screen in a portion thereof away from the active area of the screen. The fourth function, MANUAL KEYBOARD POSITIONING, when selected, causes the simulated keyboard K to be positioned in a user movable location on the screen. The fifth function, SPLIT SCREEN TO DISPLAY BOTTOM KEYBOARD, when selected, causes the simulated keyboard K to appear in the bottom portion of the screen and, simultaneously therewith, causes the software output screen to appear in its entirety in height-compacted form, in the opposite, i.e., top, portion of the screen. The sixth function, EXIT, when selected, causes the menu 38 to disappear from view.

After the computer user has activated the simulated keyboard K and otherwise made his/her selections from the menu 38, the computer system 10 is ready for entry of data or commands, using the simulated keyboard K. The simulated keyboard K can be used to enter data or commands for running, for example, commercially-available standard software packages such as data processing, spread sheet, and data-base management programs, which have been designed for use with conventional keyboard devices. It can be appreciated that the simulated keyboard K is a general-purpose input device, useful in conjunction with a broad range of computer application programs.

Whenever information is to be entered, the previously-activated simulated keyboard K is displayed on user-command, i.e., by the user pressing the display/remove keyboard toggle button 36. When the simulated keyboard K is not desired, it is removed from the screen by again pressing button 36. The button 36 only will cause the simulated keyboard K to appear if the keyboard K has been activated (and not thereafter deactivated) using the touch screen function button 34. Whenever called to the screen by pressing of toggle button 36, the simulated keyboard K will appear in the position determined by the user's selection of one of the third, fourth, or fifth functions of the menu 38. If the user fails to make such a selection after activating the simulated keyboard K, then the simulated keyboard K is positioned in accordance with, e.g., the third function, AUTO KEYBOARD POSITIONING, which is selected by the computer as the default positioning technique.

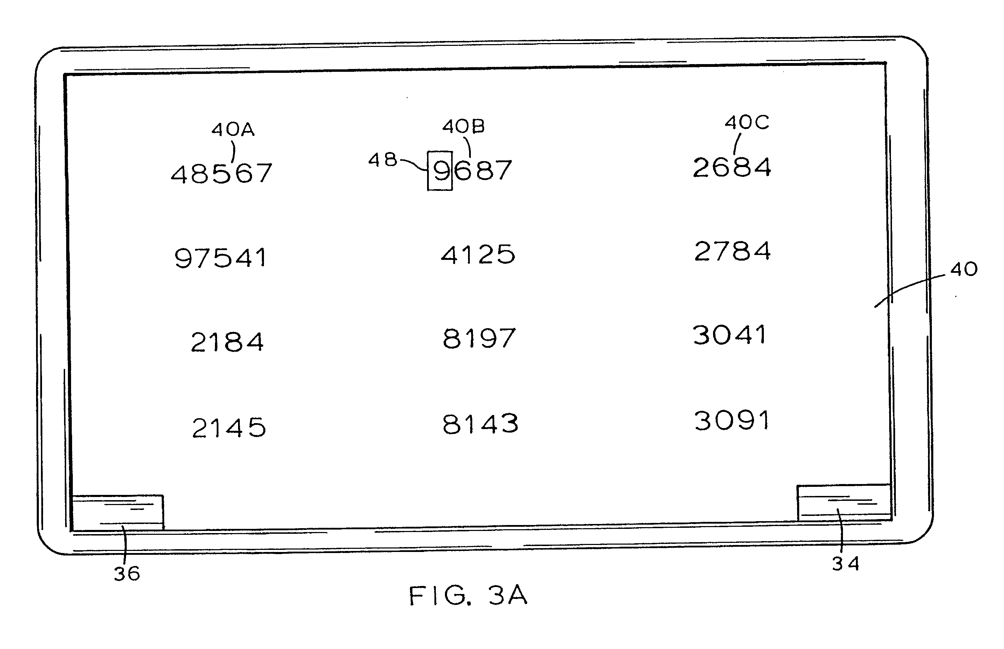

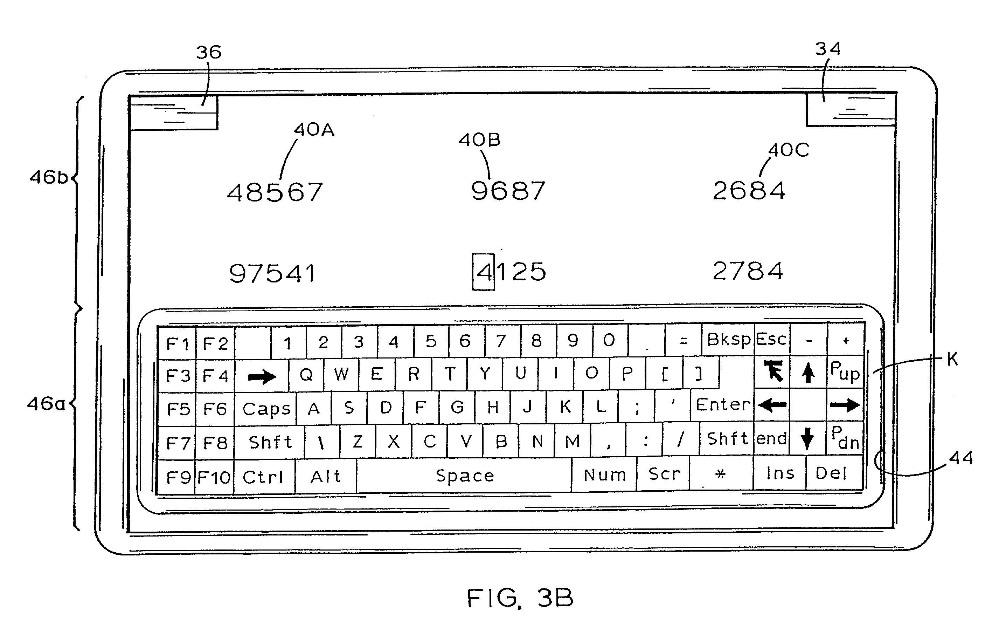

A better understanding of the different modes of displaying the simulated keyboard K in accordance with the invention can be had with reference to FIGURES 3A through 3G. FIGURE 3A depicts an illustrative example of a software output screen 40 having multiple columns 40A, 40B, 40C, each of four lines, of numbers. In addition to the displayed numbers, the output screen 40 in FIGURE 3A also has the control buttons 34, 36 in the same positions as in FIGURES 2A and 2B. The FIGURES 3B through 3G each show a portion of the output screen 40 in addition to an input screen, as described below.

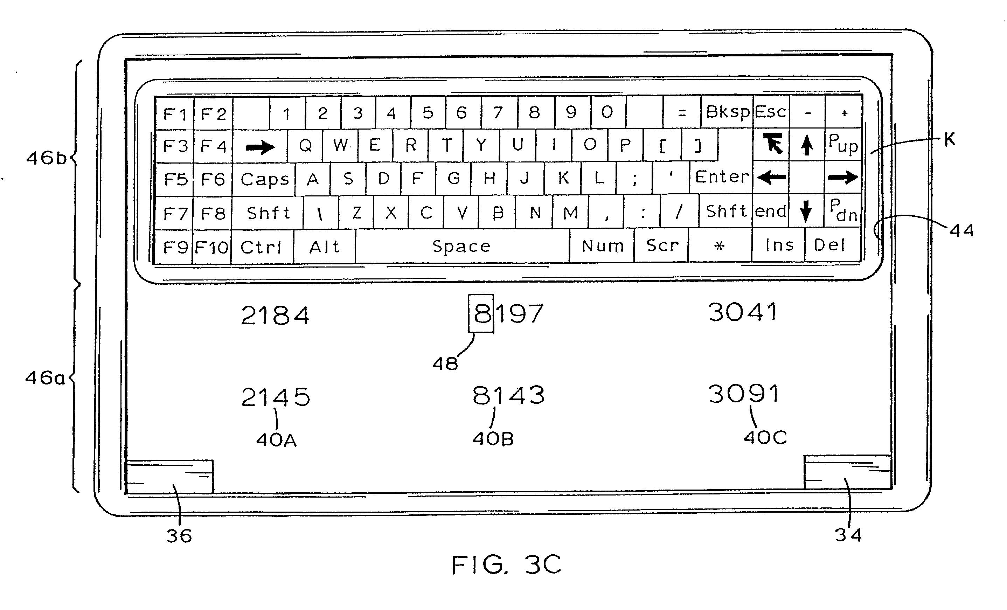

In FIGURES 3B and 3C, a simulated keyboard K appears over a portion of the screen 40, as if it had been displayed by the computer in AUTOMATIC POSITIONING mode. In other words, whenever the toggle button 36 is pressed, the previously-activated simulated keyboard K appears on screen in a window 44 occupying, e.g., as shown in FIGURE 3B, a bottom portion 46a of the display 28 if a cursor 48 is in a top portion 46b, and, as shown in FIGURE 3C, occupying the top portion 46b if the cursor 48 is in the bottom portion 46b. The cursor 48 indicates, as stated above, the active portion (e.g., half) of the screen in which information is being inserted, deleted or manipulated by the simulated keyboard K, or, simply, which is of interest to the computer user.

As can be seen, the active half of the software output screen and the simulated keyboard K are displayed concurrently. This occurs regardless of whether the active half is the top or bottom portion 46a, 46b of the screen. The computer system 10 automatically changes the position of the simulated keyboard K when the active half of the screen changes. Thus, when the cursor 48 is moved to occupy the opposite portion 46a, 46b of the screen (for example, by a computer user manipulating its position using the simulated keyboard K), the simulated keyboard, itself, changes positions.

In addition, the control buttons 34, 36 are shifted to occupy the corners of the screen in the half not containing the simulated keyboard K. Of course, if the simulated keyboard K does not occupy the full raster of the screen from left to right (as viewed in these drawings), then the control buttons 34, 36 need not shift locations as just described. In that case, the buttons 34, 36 can remain in, for example, the bottom portion of the screen.

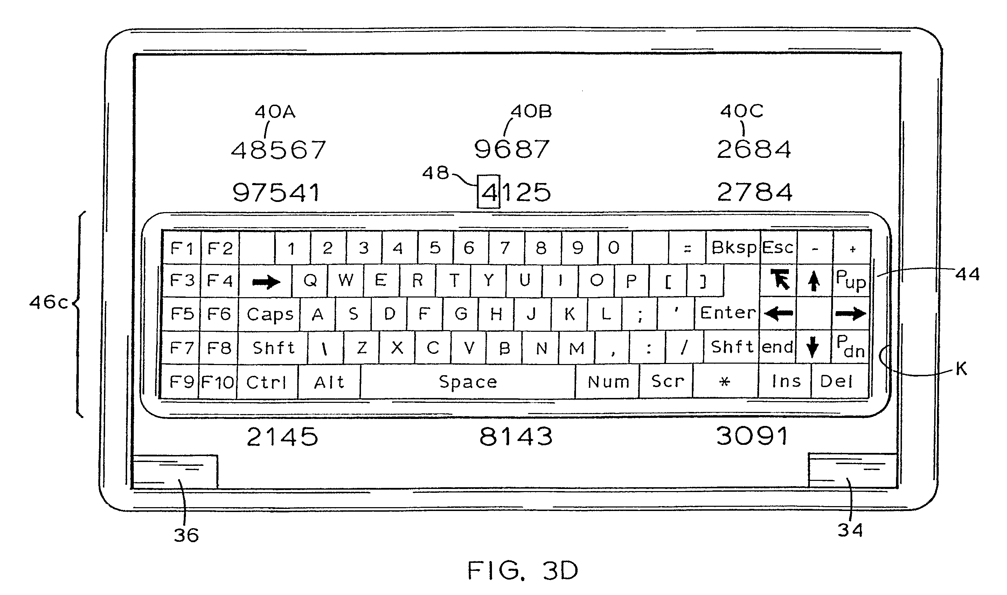

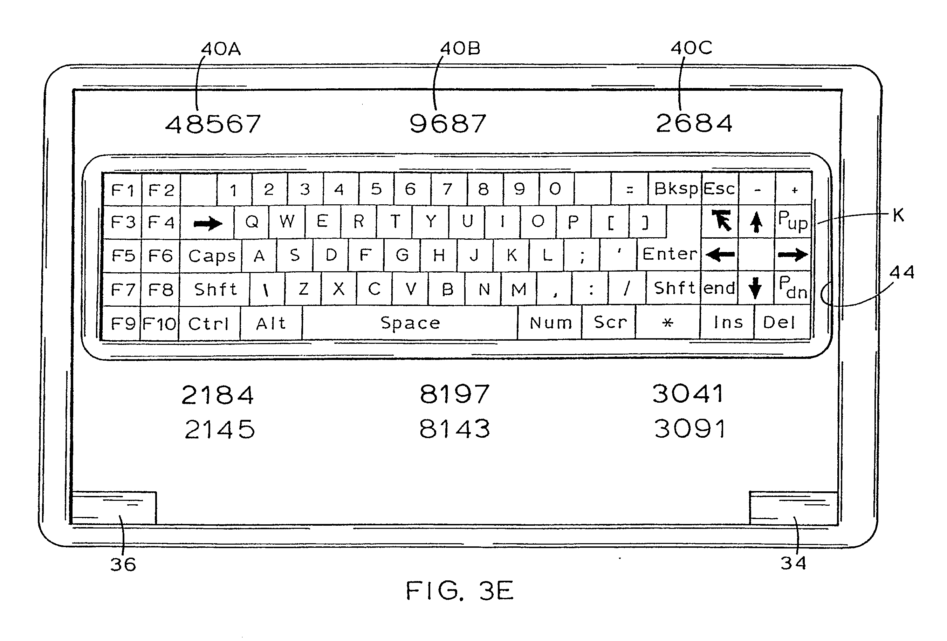

FIGURES 3D and 3E illustrate the MANUAL POSITIONING mode. In these drawings, the simulated keyboard K appears in the portion of the screen, e.g., top, bottom or any intermediate portion, selected by the computer user, regardless of where the cursor 48 is located. In FIGURE 3D, the simulated keyboard K is located in a window 44 in an intermediate portion 46c of the screen, and the cursor 48 happens to be above the keyboard window 44, although it also could have been below or blocked from view by the keyboard window 44. A reason for this is that, in MANUAL POSITIONING mode, the position of the simulated keyboard K is independent of the position of the cursor.

In FIGURE 3E, the simulated keyboard window 44 is again in the intermediate portion 46c of the screen, though one line of text higher, and therefore, masking the cursor 48 from view. Thus, if text is being entered using the simulated keyboard K, the location in which the entered text would normally appear is hidden from view on the screen of FIGURE 3E.

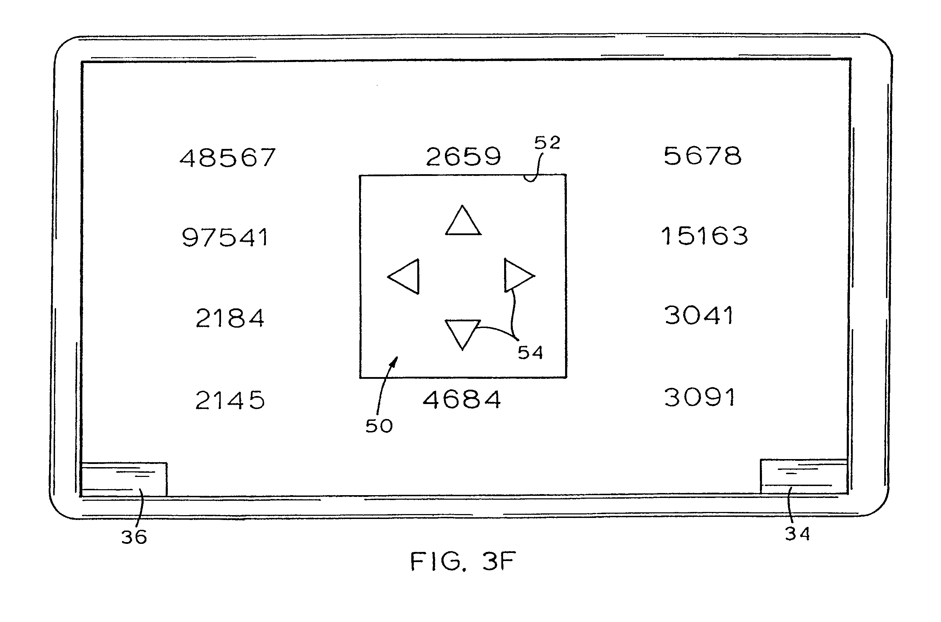

To manually position the simulated keyboard K, a manual-positioning tool 50, as shown in FIGURE 3F, Is displayed in a window 52 on the screen when the manual keyboard positioning function is selected. The manual-positioning tool 50 includes arrows 54 pointing in left, right, up and down as viewed in that drawing, in each of four orthogonally related directions. Touching any of the arrows 54 causes the window 52 to shift in the direction to which the touched arrow points. The simulated keyboard K will then appear shifted in the same direction by the amount selected by the user. Of course, if the simulated keyboard K occupies the full rastor of the screen from left to right, then it only can be manually moved up or down.

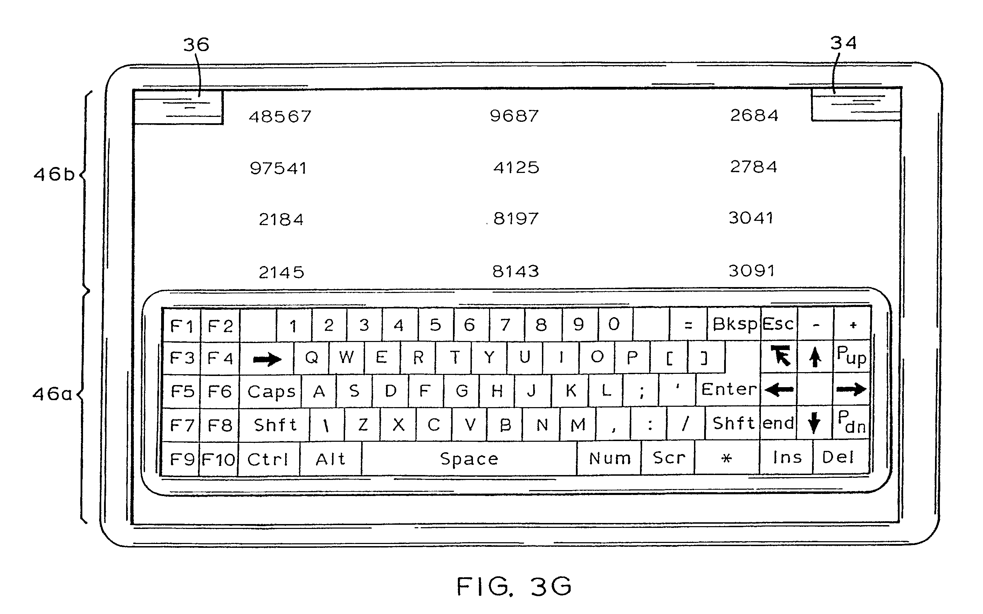

As shown in FIGURE 3G, in SPLIT SCREEN mode, whenever toggle button 36 is pressed, the previously activated simulated keyboard K appears in, e.g., the bottom portion 46a of the screen. At the same time, the software output screen, along with the toggle buttons 34, 36, appear in, e.g., the top portion 46b of the screen. Thus, what previously was a full screen of software output information now appears in only half the screen. This is achieved by reducing the number of pixels in the y- direction used to display the information, which effects a reduction in the height of the displayed characters, i.e., height compression.

Such compression also reduces the resolution of these characters. Fortunately, with conventional displays having, for example, approximately 400 or more rows of pixels, it has been found that the decrease in resolution is not so significant as to have a deleterious effect on legibility of the characters on the screen. On the other hand, it is believed that, for many applications, this technique can not be implemented on screens having approximately 200 or less rows of pixels without effecting legibility.

### Simulated Keyboard Algorithm

The simulated keyboard K is displayed and used pursuant to a computer program stored in, for example, memory 14 (FIGURE 1). An enabling understanding of that program now will now be provided by describing a suitable algorithm 100 therefor.

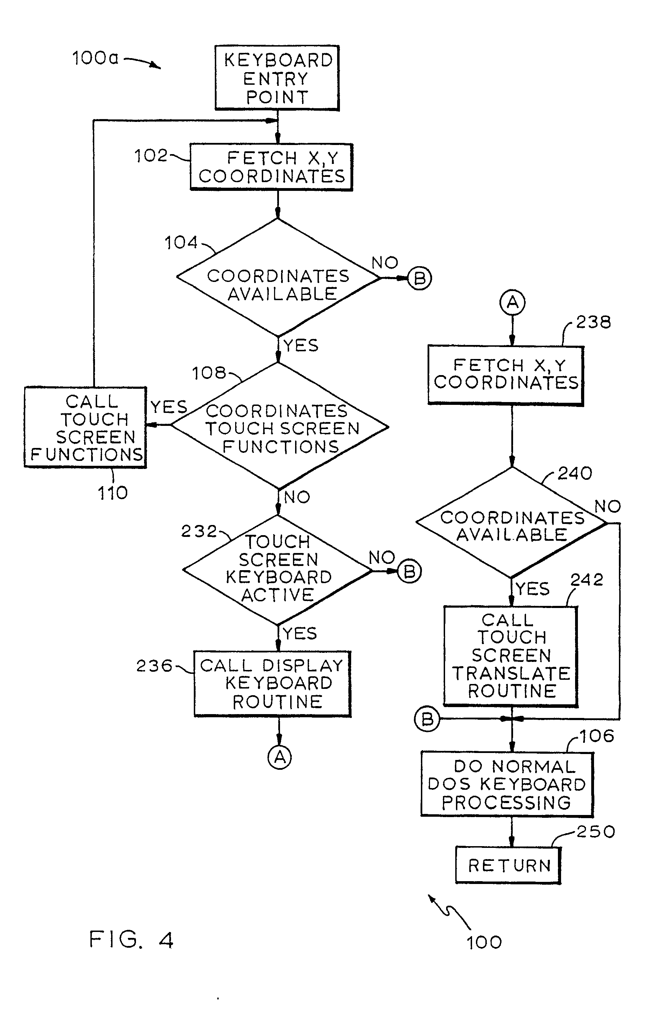

FIGURE 4 depicts, in flow chart form, a simulated keyboard call-up routine 100a of algorithm 100, which is called KEYBOARD ENTRYPOINT. In block 102, an x,y coordinates set data structure from the x,y buffer 14a (FIGURE 1) is fetched.

Then, in block 104, this fetched data structure is tested to determine whether it contains a valid set of coordinates of a touch, i.e., whether the first byte thereof is set. If it is not set, then the x,y coordinates set is not valid, and the algorithm 100 proceeds to block 106 (as indicated by the letter "B" appearing in the balloon in the drawing) at which normal keyboard processing can be carried out. Such normal processing can include the use of a conventional keyboard device (not shown). On the other hand, if the first byte is set, then a valid set of coordinates has been fetched, and the algorithm 100 proceeds to block 108.

Here, the fetched coordinates are tested to determine whether they correspond to the coordinates of the touch screen keyboard control keys 34, 36 (FIGURE 2A). If the coordinates do correspond to those of the buttons 36, 38, then, as illustrated by block 110, the algorithm 100 calls a TOUCHSCREEN FUNCTIONS ROUTINE 100b.

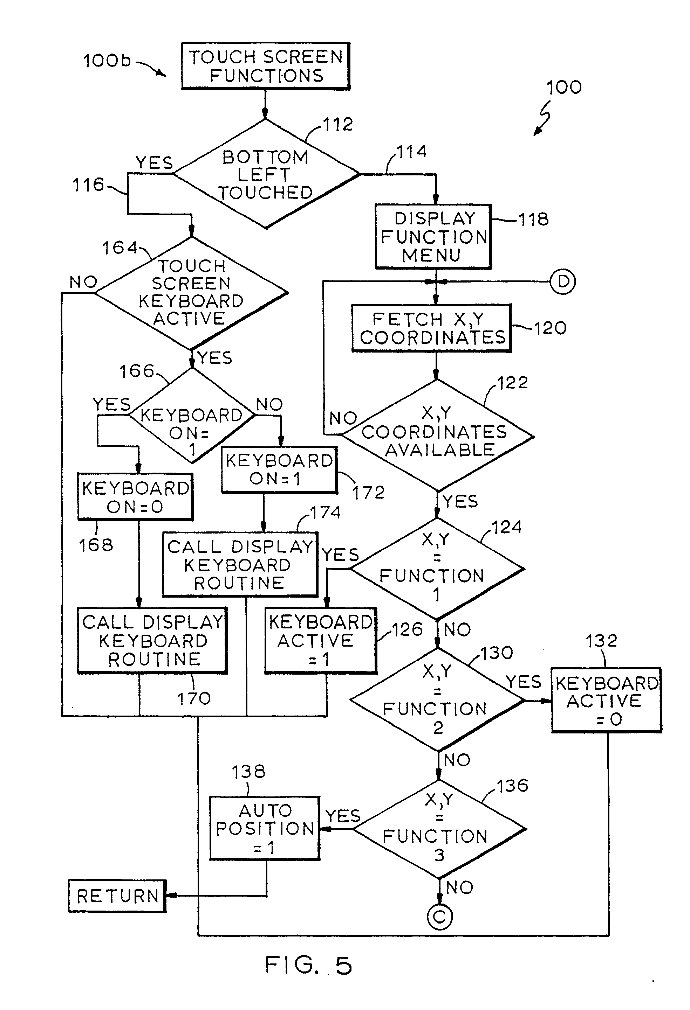

The TOUCHSCREEN FUNCTIONS ROUTINE 100b is shown in FIGURE 5. It is the method by which touch screen function selection is carried out. In block 112, the algorithm 100 tests whether the fetched coordinates correspond to the display/remove keyboard toggle button 36. Since the test of block 108 has already established that the coordinates do correspond to one of the buttons 34, 36, if the coordinates do not correspond to button 36, it follows that they must correspond to the other button, the touch screen function button 34. In that case, the algorithm 100 proceeds to the right hand branch identified at 114 in FIGURE 5. On the other hand, if the coordinates do correspond to the toggle control button 36, then the algorithm 100 proceeds to the left hand branch identified at 116 on FIGURE 5.

In the right hand branch 114 of FIGURE 5, in block 118, the function menu 38 of FIGURE 2B is displayed on the touch screen, and then the algorithm 100 awaits a touch to indicate which function is to be selected. When the computer user touches the menu 38, a new x,y coordinates data structure is produced, and, in block 120, is fetched from the x,y buffer 36 (FIGURE 1) as before.

Then, in block 122, this newly fetched data structure is tested to determine whether it contains a valid x,y coordinates set. If valid coordinates are not received, it means, for example, that the simulated keyboard K was touched at a point other than along the menu entries. If that is the case, the algorithm 100 loops back to block 120 to again await a touch on the touch sensitive screen. On the other hand, if the x,y coordinates are valid, i.e., correspond to a menu entry, then the algorithm 100 serially tests to determine which, if any, of the functions of the menu 38 correspond to the coordinates.

In block 124, the algorithm 100 tests whether the coordinates correspond to the first function of the menu 38. If the coordinates do correspond to the first function, then the algorithm 100 goes to block 126 at which the simulated keyboard K is activated, and the KEYBOARD ACTIVE flag in the flag buffer 14b of memory 14 is set, for example, to a value of one to indicate that condition. Then, the algorithm 100 returns to the KEYBOARD ENTRY POINT ROUTINE 100a, as indicated at block 128. After returning to the KEYBOARD ENTRYPOINT ROUTINE 100a of FIGURE 4 from the TOUCHSCREEN FUNCTIONS ROUTINE 100b, algorithm 100 goes to block 102 to await another touch.

If the coordinates do not correspond to the first function, the algorithm 100 next proceeds to block 130, at which it tests whether the coordinates correspond to the second function. If they do, then, the simulated keyboard K is deactivated and the KEYBOARD ACTIVE flag is cleared to, for example, zero to indicate that condition.

On the other hand, if the coordinates do not correspond to the second function, the algorithm 100 proceeds to block 136, at which it tests whether they correspond to the third function. If they do, then AUTOMATIC POSITIONING mode has been selected, in which case, in block 138, the AUTOMATIC POSITION flag in the flag buffer 14b of memory 14 is set to LOGIC ONE. Then, the algorithm 100 returns to the KEYBOARD ENTRYPOINT ROUTINE 100a, as described above and indicated at block 128.

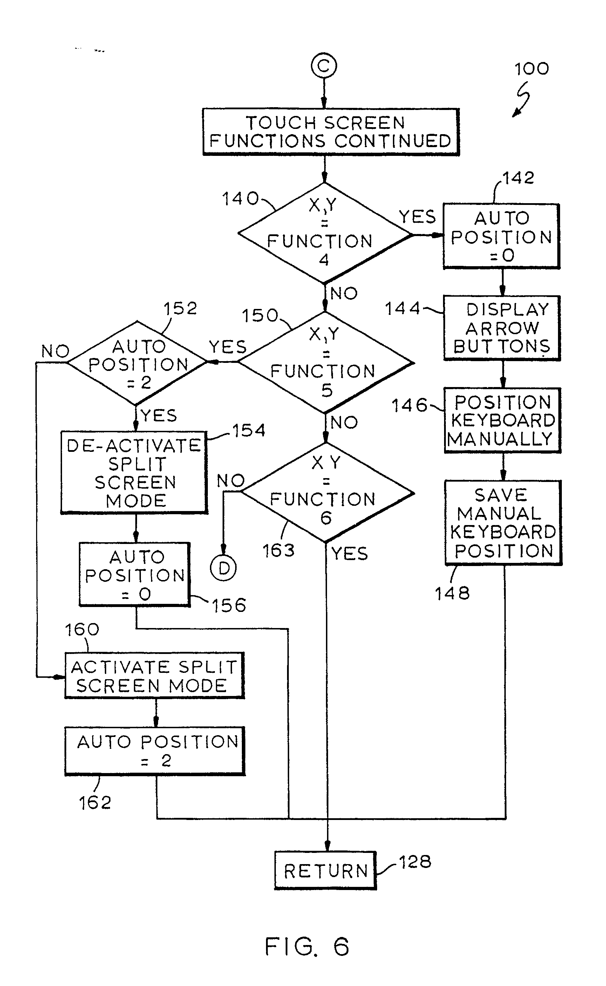

The TOUCHSCREEN FUNCTIONS ROUTINE 100b next proceeds to block 140 of FIGURE 6, as indicated by the letter "C" in a balloon. There, if the third function also was not selected, then the algorithm 100 tests whether the fourth function, manual positioning of the simulated keyboard K, was selected. If this mode were selected, then the AUTOMATIC POSITIONING flag is cleared to, for example, a value of zero in block 142 and positioning arrows are displayed on the screen (as shown in FIGURE 3F) in block 144. Then, in block 146, the computer user manually positions the simulated keyboard K by touching the arrow (or arrows) corresponding to the direction in which the user wishes the simulated keyboard K to move.

After this is completed, in block 148, the position to which the simulated keyboard K was manually re-located is stored in the keyboard position buffer 36 of memory 14 (FIGURE 1). Then, the algorithm 100 returns to the KEYBOARD ENTRYPOINT ROUTINE 100a, as described above and indicated at block 128.

If, on the other hand, the coordinates did not correspond to the fourth function, then, the algorithm 100 tests whether the coordinates correspond to the fifth function, i.e., SPLIT SCREEN mode. This is performed in block 150. If they do correspond, the algorithm 100 proceeds to block 152 at which it tests whether the AUTOMATIC POSITIONING flag has been set to, for example, a value of two. If it does have that value, then, in block 154, the algorithm 100 deactivates the SPLIT SCREEN mode. Next, in block 156, the algorithm 100 causes the AUTOMATIC POSITIONING flag to be cleared to zero to indicate the deactivation of the SPLIT SCREEN mode. Then, the algorithm 100 returns to the KEYBOARD ENTRYPOINT ROUTINE 100a, as described above and indicated at block 128.

If the AUTOMATIC POSITIONING flag previously did not have a value of two, then the algorithm 100 proceeds to block 160, at which the SPLIT SCREEN mode is activated. Subsequently, in block 162, the AUTOMATIC POSITIONING flag is set to a value of two to indicate that condition. Then, the algorithm 100 returns to the KEYBOARD ENTRYPOINT ROUTINE 100a, as described above and indicated at block 128.

Thereafter, if the touch coordinates do not correspond to the fifth function, then, in block 163, the algorithm 100 then tests whether they correspond to the sixth function, EXIT. if they do not, the algorithm 100 flows to block 120, as indicated by the "D" in a balloon. However, if EXIT was touched, then, the algorithm 100 returns to the KEYBOARD ENTRYPOINT ROUTINE 100a, as described above and indicated at block 128.

Returning to FIGURE 5, if the test of block 112 indicates that the display/remove keyboard toggle button 36 had been pressed, the algorithm 100 proceeds along the left hand branch 166 to block 164. In block 164, the algorithm 100 tests whether the simulated keyboard K is active, i.e., whether the KEYBOARD ACTIVE flag is set to a value of one. If it is not, then the algorithm 100 ignores that touch, and returns to the KEYBOARD ENTRYPOINT ROUTINE 100a, as described above and indicated in block 128.

If, on the other hand, the touch screen is active, as indicated by that flag having a value of one, then, in block 166, the algorithm 100 tests whether a KEYBOARD ON flag is set to a value of one. If that also is set to that value, that indicates that the simulated keyboard K had been displayed on the screen immediately prior to the touch of button 36. Accordingly, the algorithm 100 proceeds to block 168, at which the KEYBOARD ON flag is cleared to zero, and, then, to block 170, at which a DISPLAY KEYBOARD ROUTINE 100C is called. (That routine will be described shortly.) On the other hand, if the KEYBOARD ON flag is not set to a value of one, which would mean that, immediately prior to button 36 having been pressed, the simulated keyboard K had not been displayed on screen, then the algorithm 100 proceeds to block 172, at which the KEYBOARD ON flag is set to a value of one, and, then, to block 174, at which the DISPLAY KEYBOARD ROUTINE 100C is called.

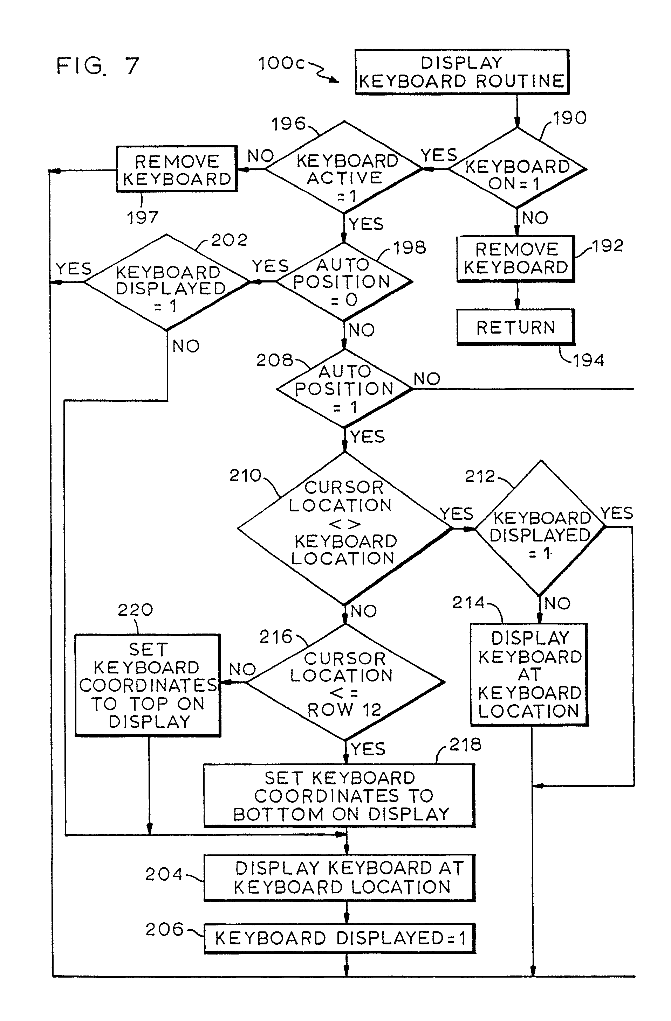

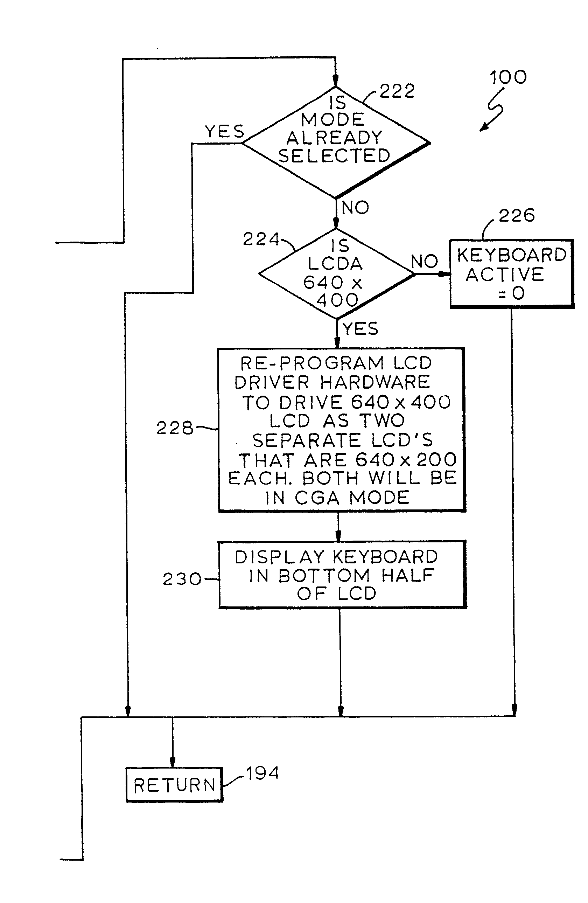

The DISPLAY KEYBOARD ROUTINE 100c is depicted in FIGURE 7. In this routine, the algorithm 100 first determines, in block 190, whether the simulated keyboard K is displayed, by determining whether the KEYBOARD ON flag stored in the flag buffer 14b of memory 14 (FIGURE 1) has a value of one. If it is displayed, then, in block 192, it is removed from the screen and the algorithm 100 returns, as indicated in block 194, to the previous routine from which the DISPLAY KEYBOARD ROUTINE 100C was entered.

If the test of block 190 determines that the simulated keyboard K is displayed, the algorithm 100 next tests in block 196 whether the KEYBOARD ACTIVE flag is set to a value of one to indicate that the simulated keyboard K is active. If it is not active, then, in block 197, the simulated keyboard K is removed from the screen. Afterwards, the algorithm 100 returns, as indicated in block 194, to the previous routine from which the DISPLAY KEYBOARD ROUTINE 100C was entered.

On the other hand, if the simulated keyboard K is active, then the algorithm 100 proceeds to block 198. In this block, the algorithm 100 determines whether the AUTOMATIC POSITIONING flag has a value of respectively zero. If the value is zero, then, in block 202, the algorithm 100 tests whether the simulated keyboard K is displayed. This is performed by determining whether the KEYBOARD DISPLAY flag stored in the flag buffer 14b of the memory 14 (FIGURE 1) has a value of one. If that flag has that value, then the algorithm 100 returns, as indicated in block 194, to the previous routine from which the DISPLAY KEYBOARD ROUTINE 100C was entered.

If the simulated keyboard K is not displayed, however, then the algorithm 100 jumps to block 204. In block 204, the simulated keyboard K is displayed at the screen location identified by the contents of the KEYBOARD POSITION buffer 36 (FIGURE 1). Afterwards, in block 206, the KEYBOARD DISPLAY flag is set to a value of one.

Then, the aigorithm 100 returns, as indicated in block 194, to the previous routine from which the DISPLAY KEYBOARD ROUTINE 100C was entered.

Returning the discussion to block 198, if the AUTOMATIC POSITIONING flag does not have a value of zero, it again is tested, this time in block 208 to determine whether it has a value of one. If the value is one, then, in block 210, the cursor location is fetched from the cursor control 35 and is compared with the keyboard location stored in the keyboard position buffer 36. If the locations do not conflict, i.e., if the cursor location does not fall within the keyboard location, then the algorithm 100 proceeds to block 212.

There, the algorithm 100 tests whether the simulated keyboard K is displayed by determining whether the KEYBOARD DISPLAY flag has a value of one. If it is displayed, then the algorithm 100 returns, as indicated in block 194, to the previous routine from which the DISPLAY KEYBOARD ROUTINE 100C was entered. If the keyboard K is not displayed, then, in block 214, the simulated keyboard K is displayed at that keyboard location.

On the other hand, if the cursor and keyboard locations conflict, then the algorithm 100 proceeds to block 216. There, the cursor location is tested to determine whether it falls within the top half of the screen, which, for example, in a display having 25 lines in the y-directions is the top 12 lines of the screen. If it does fall within the top half, then, in block 218, the keyboard location coordinates are reset to position the simulated keyboard K in the bottom half of the display. Afterwords, the algorithm 100 proceeds to block 204, wherein the simulated keyboard K is displayed at that location, as described above.

If the cursor location does not fall within the top half of the screen, then, in block 220, the keyboard coordinates are set to the top half, and the algorithm 100 goes to block 204, wherein the simulated keyboard K is displayed at that location, as described above.

Returning to block 208, if the AUTOMATIC POSITIONING flag tested in that block does not equal one, then it must have a value of two, which indicates that SPLIT SCREEN mode was selected. The algorithm 100 then proceeds to block 222, at which it tests whether the mode was already selected. If so, then the algorithm 100 returns, as indicated in block 194, to the previous routine from which the DISPLAY KEYBOARD ROUTINE 100C was entered.

Otherwise, in block 224 the algorithm 100 next inquires whether the LCD display is of sufficient size to produce legible screens in SPLIT SCREEN mode, for example, whether it is a 640 x 400 display. If not, the SPLIT SCREEN mode would not be suitable, and, in block 226, the simulated keyboard K is deactivated by changing the KEYBOARD ACTIVE flag to zero. Then, the algorithm 100 goes to block 194, and then returns to the previous routine.

If the display is of a suitable size, then, in block 228, the display contoller 20 automatically is reprogrammed to drive the display in SPLIT SCREEN mode. In other words, the screen is driven as though it were two separate screens, for example, one physically above the other as shown in FIGURE 3G. Preferably, both parts of the split screen are in CGA mode.

With this done, in block 230, the simulated keyboard K is displayed in the bottom half of the screen while the normal software output is displayed in the top, or vica versa. Then, the algorithm 100 returns, as indicated in block 194, to the previous routine from which the DISPLAY KEYBOARD ROUTINE 100C was entered.

After the DISPLAY KEYBOARD ROUTINE 100c is completed, the algorithm 100 returns to the KEYBOARD ENTRYPOINT ROUTINE 100a, as described above and indicated at block 128.

Continuing now with the KEYBOARD ENTRYPOINT ROUTINE 100a, and, in particular, continuing the description of block 108, if the fetched coordinates are not those of touch screen function buttons 34, 36, then the algorithm 100 proceeds to block 232. In that block, the algorithm 100 tests whether the simulated keyboard K is active, i.e., the KEYBOARD ACTIVE flag is set to a value of one. If not, the touch is ignored and the algorithm 100 proceeds to block 106 as described above.

If, however, the simulated keyboard K is active, then, in block 236, the algorithm 100 again calls and executes the DISPLAY KEYBOARD ROUTINE 100C of FIGURE 7, as described above.

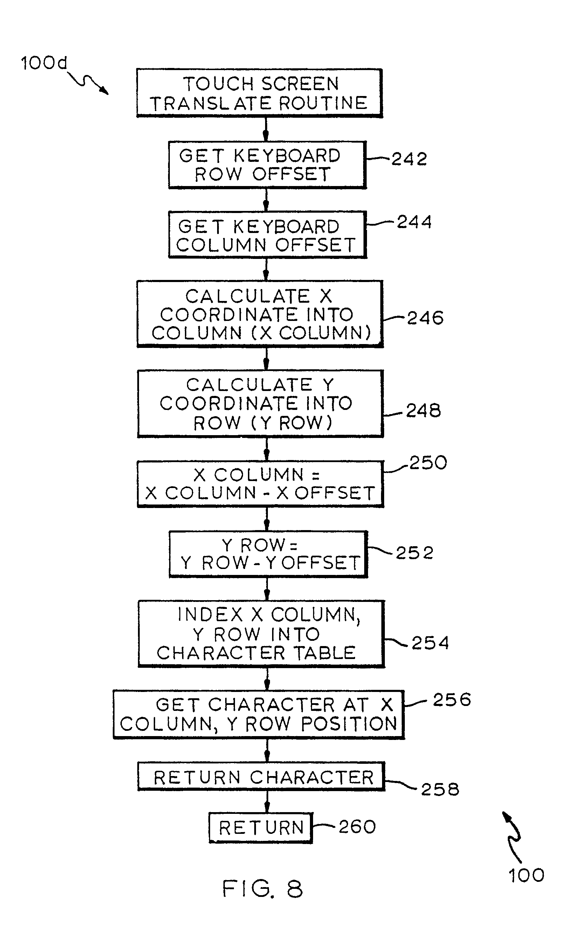

Afterwards, in block 238, the algorithm 100 fetches the next set of coordinates from the x,y buffer 14a, as described above. The algorithm 100 then, in block 240, tests whether these are valid, again as described above. If the coordinates are not valid, they are ignored and the algorithm 100 proceeds to block 106, as described above. On the other hand if the coordinates are valid, the algorithm 100 in block 242 proceeds to the TOUCHSCREEN TRANSLATE ROUTINE 100d of FIGURE 8.

In FIGURE 8, the TOUCHSCREEN TRANSLATE ROUTINE 100d translates the set of coordinates of a touch on the simulated keyboard K into a character-identifying signal. The term "character" in the foregoing term is used in a comprehensive sense to denote an alpha-numeric character, punctuation, or other symbol, or function identified by the selection and pressing (i.e. touching) of a key on the simulated keyboard K by the computer user.

A complication arising in this translation is due to the mobility (i.e., re-positioning) of the simulated keyboard K on the touch screen. Since the simulated keyboard K can be moved to any of a variety of locations on the screen, it is necessary to determine an offset in the x- and y- directions of the simulated keyboard K from a fixed point of reference, or origin, e.g. the upper left hand corner pixel of the screen. Preferably, this origin is the same as used in determining the set of coordinates of the touch.

For these purposes, any time the position of the simulated keyboard K is changed (regardless of whether the simulated keyboard K is in the MANUAL POSITIONING, AUTOMATIC POSITIONING or SPLIT SCREEN mode), the CPU 12 calculates the offset in the x- direction (i.e., the "column offset") and in the y-direction (i.e., the "row offset"). This offset is stored in the KEYBOARD OFFSET buffer 14d in the memory 14.

Then, since the relative location of each key within the keyboard is known, and the offset to the keyboard is known, the precise location on the screen of each key can be computed.

With that introduction, FIGURE 8 can now be described starting with blocks 242 and 244, at which the row and column offsets, respectively, are fetched from the KEYBOARD OFFSET buffer 14d. Next, in blocks 246 and 248 the algorithm 100 calculates a value for the x- coordinate into the column which is identified by the x-coordinate of the touch, and calculates a y-coordinate into the row which is identified by the y-coordinate of the touch. These are called respectively the "x column" and "y row". Then, in blocks 250 and 252, the respective row and column offsets are subtracted from the values of the x column and y row to yield new coordinates which define the location of a "touched" key within the keyboard window itself.

Then, in block 254, using the new x-column\y-row coordinates as an index into the character table stored in the CHARACTER TABLE buffer 14e of the memory 14 (FIGURE 1), an entry in that table is identified, and, in block 256, fetched. The algorithm 100, in block 258, places the fetched character in the CHARACTER buffer 14f in memory 14. Afterwords, the algorithm 100 returns, in block 260, to the KEYBOARD ENTRYPOINT ROUTINE 100a.

There, the algorithm 100 proceeds with block 106, as described above, in which normal DOS keyboard processing takes place, and then, in block 250, returns to begin algorithm 100 over again.

An appreciation of the present invention can be had by considering the use of the invention in a compact, general-purpose lap-top computer, which uses either a conventional external keyboard or a built-in touch-sensitive display. For running standard software packages, such as those mentioned above, a simulated keyboard having a full complement of keys arranged in either the conventional QWERTY or an alphabet format can be displayed.

Employing the simulated keyboard for entering information and instructions using the disclosed computer often is more convenient then using an external keyboard. For example, it would be unwieldy to use an external keyboard when the disclosed computer is being used in an automobile or airplane. Furthermore, it would be awkward to use an external keyboard while the user is ambulatory. In addition, it makes sense to eliminate such peripherals in order to take full advantage of the compact design of the computer. Thus, the advantages of the present invention are evident.

The foregoing description has been limited to a specific embodiment of this invention. It will be apparent, however, that variations and modifications may be made to the invention, with the attainment of some or all of its advantages. Therefore, it is the object of the appended claims to cover all such variations and modifications as come within the true spirit and scope of the invention.

## Claims

1. A general-purpose computer system comprising:
A) computer means for receiving an input, running any of a plurality of application programs, generating an output in response to said application program being run, and generating a simulated keyboard independent of said application program being run; and
B) a touch-sensitive display connected to said computer means for concurrently displaying
   i) said output from said computer means, and
   ii) said simulated keyboard for manually supplying said input to said computer means.

2. The general-purpose computer system in accordance with claim 1, wherein said simulated keyboard can be displayed on said touch-sensitive display in a position thereon determined by said computer means, and said computer means includes means responsive to said input for manually changing said position of said simulated keyboard.

3. The general-purpose computer system in accordance with claim 2, wherein said simulated keyboard can be displayed on said touch-sensitive display in a position thereon determined by said computer means, said computer means includes means for generating a cursor, said touch-sensitive display can display said cursor concurrently with said output and said simulated keyboard, and said computer means further includes means for changing said position of said simulated keyboard in response to said position of said cursor.

4. The general-purpose computer system in accordance with claim 3, wherein said computer means can cause a first and second portion of said output to be displayed concurrently
(i) in a first mode in which said first portion of said output appears in a first portion of said touch-sensitive display, and a second portion of said output appears in a second portion of said touch-sensitive display, and
(ii) in a second mode in which said first and second portions of said output appear concurrently in said first portion of said touch-sensitive display, and said computer means can further cause said simulated keyboard to be displayed in said second portion of said touch-sensitive display.

5. The general-purpose computer system in accordance with claim 1, wherein said simulated keyboard can be displayed on said touch-sensitive display in a position thereon determined by said computer means, said computer means includes means for generating a cursor, said touch-sensitive display can display said cursor concurrently with said output and said simulated keyboard, and said computer means further includes means for changing said position of said simulated keyboard in response to said position of said cursor.

6. The general-purpose computer system in accordance with claim 1, wherein said computer means can cause a first and seccnd portion of said output to be displayed concurrently
(i) in a first mode in which said first portion of said output appears in a first portion of said touch-sensitive display, and a second portion of said output appears in a second portion of said touch-sensitive display, and
(ii) in a second mode in which said first and second portions of said output appear concurrently in said first portion of said touch-sensitive display, and said computer means can further cause said simulated keyboard to be displayed in said second portion of said touch-sensitive display.

7. A method of computing using a touch-sensitive display, said method comprising the steps of:
A) using a general-purpose computer for receiving an input, running any of a plurality of application programs, generating an output in response to said application program being run, and generating a simulated keyboard independent of said application program being run;
B) concurrently displaying on said touch-sensitive display
   i) said output from said computer, and
   ii) said simulated keyboard; and
C) manually supplying said input to said computer means using said touch-sensitive display.

8. The computing method in accordance with claim 7, wherein said simulated keyboard displaying step includes displaying said simulated keyboard on said touch-sensitive display in a position thereon determined by said computer means in response to said input.

9. The computing method in accordance with claim 7, further including the step of displaying a tool for manually entering a position in which said simulated keyboard is to be displayed on said touch-sensitive display.

10. The computing method in accordance with claim 7, further including displaying a cursor at a position on said touch-sensitive display, and wherein said simulated keyboard displaying step includes displaying said simulated keyboard at a position on said touch-sensitive display in response to said position thereon of said cursor.

11. The computing method in accordance with claim 7, further including the steps of:

(i) in a first mode, displaying a first and second portion of said output in respective first and second portions of said touch-sensitive display, and

(ii) in a second mode, displaying said first and second portions of said output in said first portion of said touch-sensitive display.

12. A method of displaying a computer output, said method comprising the steps of:

(i) in a first mode, displaying a first and second portion of said output in respective first and second portions of a touch-sensitive display, and

(ii) in a second mode, displaying said first and second portions of said output in said first portion of said touch-sensitive display.

13. The method in accordance with claim 12, further including the step of, in said second mode, displaying a simulated keyboard in said second portion while said first and second output portions are displayed in said first portion.

14. The method in accordance with claim 12, wherein in said second mode, said first and second displayed output portions are compressed in height.

15. A method of displaying a simulated keyboard on a touch-sensitive display, said method comprising the steps of:

A) providing a plurality of simulated keyboard positioning techniques including at least a manual positioning technique and an automatic positioning technique,

B) selecting one of said simulated keyboard positioning techniques, and

D) positioning said simulated keyboard on said touch-sensitive display in accordance with the positioning technique selected.

16. The method in accordance with claim 15, wherein said providing step includes displaying a menu of simulated keyboard positioning techniques on said touch-sensitive display, and said selecting step includes, in response to a manual touch on said touch-sensitive display, selecting one of said simulated keyboard positioning techniques.

17. The method in accordance with claim 16, further including the steps of

A) displaying a control button on said touch-sensitive display, and

B) manually touching the control button to cause said menu to appear on said display.

18. A method of displaying a simulated keyboard on a touch-sensitive display, said method comprising the steps of:

A) displaying a control button on said touch-sensitive display, and

B) displaying said simulated keyboard in response to a touch on said control button.

19. The method in accordance with claim 18, further including the step of removing the display of said simulated keyboard from said touch-sensitive display in response to a second touch thereon.

20. The method in accordance with claim 18, further including

A) displaying a second control button on said touch-sensitive display,

B) activating said simulated keyboard in response to a touch on said second control button, and

C) wherein said first control button only will cause said simulated keyboard to be displayed when said simulated keyboard is activated.

FIG. 1

FIG. 2A

EP 0 422 577 A2

KEYBOARD FUNCTIONS

1 - ACTIVATE KEYBOARD

2 - DE-ACTIVATE KEYBOARD

38 — 3 - AUTO KEYBOARD POSITIONING

4 - MANUAL KEYBOARD POSITIONING

5 - SPLIT SCREEN TOP DISPLAY
BOTTOM KEYBOARD (640 x 400 ONLY)

6 - EXIT

FIG. 2B

FIG. 3A

40A
48567

40B
48 [9]687

40C
2684

97541    4125    2784

2184    8197    3041

2145    8143    3091

40

36    34

EP 0 422 577 A2

FIG. 3B

EP 0 422 577 A2

EP 0 422 577 A2

| F1 | F2 |    | 1 | 2 | 3 | 4 | 5 | 6 | 7 | 8 | 9 | 0 |   | = | Bksp | Esc | - | + |
|----|----|----|---|---|---|---|---|---|---|---|---|---|---|---|------|-----|---|---|
| F3 | F4 | → | Q | W | E | R | T | Y | U | I | O | P | [ | ] |  | ↖ | ↑ | P_up |
| F5 | F6 | Caps | A | S | D | F | G | H | J | K | L | ; | ' | Enter |  | ← | → |  |
| F7 | F8 | Shft | \ | Z | X | C | V | B | N | M | , | : | / | Shft | end | ↓ | P_dn |  |
| F9 | F10 | Ctrl | Alt |  |  | Space |  |  |  | Num | Scr | * |  | Ins | Del |  |  |  |

2184        8197        3041

2145        8143        3091

40A         40B         40C

FIG. 3C

FIG. 3D

EP 0 422 577 A2

FIG. 3E

19

FIG. 3F

EP 0 422 577 A2

48567    9687    2684

97541    4125    2784

2184    8197    3041

2145    8143    3091

| F1 | F2 | | 1 | 2 | 3 | 4 | 5 | 6 | 7 | 8 | 9 | 0 | | = | Bksp | Esc | – | + |

| F3 | F4 | ➡ | Q | W | E | R | T | Y | U | I | O | P | [ | ] | | ↖ | ↑ | P up |

| F5 | F6 | Caps | A | S | D | F | G | H | J | K | L | ; | ' | Enter | ← | → |

| F7 | F8 | Shft | \ | Z | X | C | V | B | N | M | , | : | / | Shft | end | ↓ | P dn |

| F9 | F10 | Ctrl | Alt | Space | Num | Scr | * | Ins | Del |

FIG. 3G

FIG. 4

FIG. 5

FIG. 6

24

FIG. 7

100c

DISPLAY
KEYBOARD ROUTINE

196

REMOVE
KEYBOARD

197

NO — KEYBOARD
ACTIVE
= 1 — YES

190

KEYBOARD
ON = 1 — YES

YES

NO

REMOVE
KEYBOARD

192

RETURN

194

YES

202

KEYBOARD
DISPLAYED
= 1 — YES

NO

198

AUTO
POSITION
= 0

YES

NO

208

AUTO
POSITION
= 1 — NO

YES

210

CURSOR
LOCATION
< >
KEYBOARD
LOCATION — YES

212

KEYBOARD
DISPLAYED
= 1 — YES

NO

NO

220

SET
KEYBOARD
COORDINATES
TO TOP ON
DISPLAY

216

NO — CURSOR
LOCATION
< =
ROW 12

YES

214

DISPLAY
KEYBOARD
AT
KEYBOARD
LOCATION

218

SET KEYBOARD
COORDINATES TO
BOTTOM ON DISPLAY

204

DISPLAY KEYBOARD AT
KEYBOARD LOCATION

206

KEYBOARD DISPLAYED = 1

IS MODE ALREADY SELECTED —222

YES

NO

224— IS LCDA 640 x 400

NO

226

KEYBOARD ACTIVE = 0

YES

228— RE-PROGRAM LCD DRIVER HARDWARE TO DRIVE 640 x 400 LCD AS TWO SEPARATE LCD'S THAT ARE 640 x 200 EACH. BOTH WILL BE IN CGA MODE

230— DISPLAY KEYBOARD IN BOTTOM HALF OF LCD

100

RETURN —194

26

100d

TOUCH SCREEN
TRANSLATE ROUTINE

GET KEYBOARD
ROW OFFSET — 242

GET KEYBOARD
COLUMN OFFSET — 244

CALCULATE X
COORDINATE INTO
COLUMN (X COLUMN) — 246

CALCULATE Y
COORDINATE INTO
ROW (Y ROW) — 248

X COLUMN =
X COLUMN - X OFFSET — 250

Y ROW =
Y ROW - Y OFFSET — 252

INDEX X COLUMN,
Y ROW INTO
CHARACTER TABLE — 254

GET CHARACTER AT X
COLUMN, Y ROW POSITION — 256

RETURN CHARACTER — 258

RETURN — 260

100

FIG. 8